# EUROPEAN PATENT APPLICATION

(11) **EP 4 338 829 A1**
(43) Date of publication of application: **20.03.2024**
(21) Application number: 23196587.2
(22) Date of filing: 11.09.2023
(51) Int. Cl.: B01J 8/44

(54) **A FLUIDIZATION PAD, AND A FLUIDIZED BED APPARATUS COMPRISING A FLUIDIZATION PAD**

(30) Priority: 14.09.2022 SE 2251064
(71) Applicant: SaltX Technology AB, 129 44 Hägersten (SE)
(72) Inventor: BLACKMAN, Corey, 181 55 Lidingö (SE); PERSSON, Martin, 832 96 Frösön (SE)
(74) Representative: Ström & Gulliksson AB

(57) **Abstract**

There is provided a fluidization pad (1) for a fluidized bed apparatus (50). The fluidization pad (1) comprises a lower sheet (10) comprising inlet apertures (11), an upper sheet (30) comprising outlet apertures (31) and an interior sheet (20) arranged between the lower and upper sheets (10, 30). The interior sheet (20) comprises elongated apertures (21) connecting the inlet apertures (11) to the outlet apertures (31), the elongated apertures (21) extend in plane with the fluidization pad (1). Each one of the elongated apertures (21) comprises a first end and a second end, wherein the first end is in fluid contact with at least one inlet aperture (11), and wherein the second end is in fluid contact with at least one outlet aperture (31). There is further provided a fluidized bed apparatus (50).

## Description

### Field of the invention

The present disclosure generally pertains to fluidization of particulate material and more particularly relates to a fluidization pad for a fluidized bed apparatus. The disclosure further relates to a fluidized bed apparatus for energy storage and/or carbon capture.

### Background

Fluidized beds for various purposes are known in the art. For example, WO2021105467A1 discloses a system for energy storage comprising a fluidized bed apparatus.

US3404845A discloses a fluidizing-bed plate including a lower, a middle and an upper plate. The lower plate has a plurality of small round apertures that coincide with a plurality of much larger quadratic apertures made in the middle plate. The upper plate has apertures identical to the ones of the middle plate, and the apertures of the upper plate are partly aligned with the apertures of the middle plate but not aligned with the apertures of the lower plate.

EP3321579A1 discloses nozzle base for a combustion fluidized bed reactor. The nozzle base comprises two plates each comprising through-holes and depressions associated with each through-hole.

US 20210220786 discloses a unit and method for producing granulate as well as an adapter connection piece for connecting a granulator which produces a granulate, and a fluidizing apparatus, wherein the granulates which are produced in the granulator are fluidised by a distributor plate. In the distributor plate there are elongated holes straight through the distributor plate.

Even though at least some currently available fluidization pads are successfully used today, there still is room for improvement with regard to their efficiency and performance, in particular when utilized in fluidized bed apparatus for energy storage and/or carbon capture.

### Summary

One objective of the present disclosure is to obviate at least some of the disadvantages of the prior art and provide improved fluidization of particulate material. Other objectives include to provide an improved fluidization pad for a fluidized bed apparatus, to provide a fluidized bed apparatus for energy storage and/or CO₂ capture comprising such a fluidization pad.

In a first aspect there is provided a fluidization pad for a fluidized bed apparatus, the fluidization pad comprising a lower sheet comprising inlet apertures through which a fluidization fluid may enter the fluidization pad, an upper sheet comprising outlet apertures through which the fluidization fluid may exit the fluidization pad, and an interior sheet arranged between the lower and upper sheets, wherein the lower, interior, and upper sheets are in close contact with one another, the interior sheet comprises elongated apertures connecting the inlet apertures to the outlet apertures, wherein each one of the elongated apertures comprises a first end and a second end, wherein the first end is in fluid contact with at least one inlet aperture, and wherein the second end is in fluid contact with at least one outlet aperture, and the elongated apertures extend in plane with the fluidization pad.

The fluidized bed apparatus may be for energy storage and/or CO₂ capture.

In a second aspect there is provided a fluidized bed apparatus for energy storage and/or CO₂ capture comprising a fluidization pad, the fluidization pad comprising a lower sheet comprising inlet apertures through which a fluidization fluid may enter the fluidization pad, an upper sheet comprising outlet apertures through which the fluidization fluid may exit the fluidization pad, and an interior sheet arranged between the lower and upper sheets, wherein the lower, interior, and upper sheets are in close contact with one another, the interior sheet comprises elongated apertures connecting the inlet apertures to the outlet apertures, wherein each one of the elongated apertures comprises a first end and a second end, wherein the first end is in fluid contact with at least one inlet aperture, and wherein the second end is in fluid contact with at least one outlet aperture, and the elongated apertures extend in plane with the fluidization pad. Further embodiments of the present invention are defined in the appended dependent claims, which are explicitly incorporated herein.

One advantage obtained is that the particulate material contained in the fluidized bed apparatus is stopped or at least hindered from passing through, or falling through, the fluidization pad. Thereby the risk that the fluidization pad becomes clogged is reduced or mitigated. Especially the elongated apertures, which extend in plane with the fluidization pad, hinder or stop such a movement of the particulate material. The elongated apertures may thus extend in plane with the interior sheet, which may be arranged essentially horizontally.

Other advantages are that the fluidization pad is easy to manufacture. The apertures may be made by stamping, water cutting, laser cutting or etching the sheets. Also, the flow area through the fluidization pad may be customised by selectively aligning the inlet apertures, the elongated apertures and the outlet apertures with one another. The alignment may for example be modified by rotating or sliding the sheets with respect to one another.

### Brief description of the drawings

Aspects and embodiments will be described with reference to the following drawing in which:

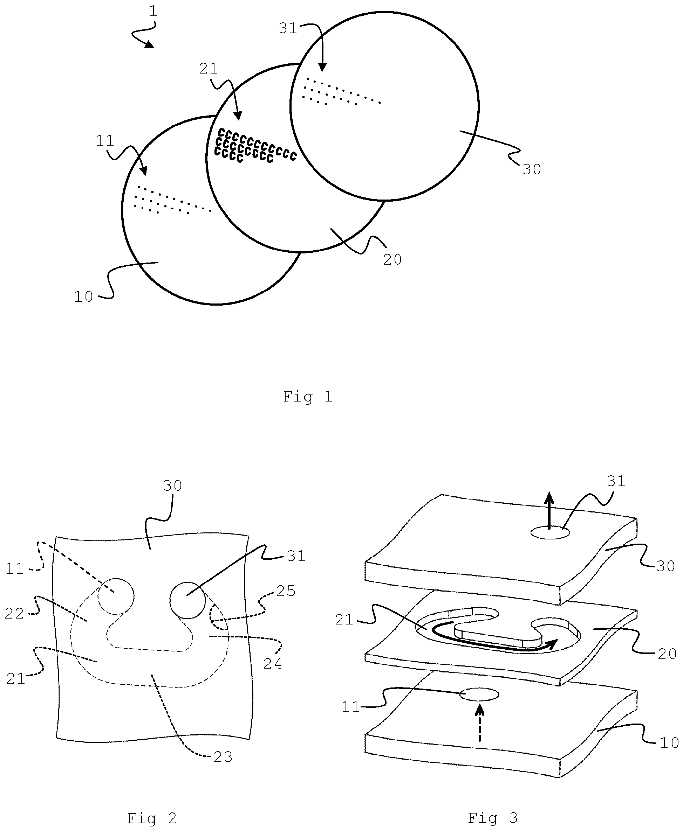

Figure 1 schematically shows a fluidization pad for a fluidized bed apparatus according to the present invention. The fluidization pad comprises a lower sheet comprising inlet apertures through which a fluidization fluid may enter the fluidization pad, an upper sheet comprising outlet apertures through which the fluidization fluid may exit the fluidization pad 1 and an interior sheet arranged between the lower and upper sheets. The lower, interior, and upper sheets are in close contact with one another and the interior sheet comprises elongated apertures connecting the inlet apertures to the outlet apertures. As is illustrated in the figure, the elongated apertures extend in plane with the fluidization pad. It is further illustrated in the figure that the elongated apertures each comprise one entrance in a first in fluid contact with an inlet aperture and one exit in an opposite end in fluid contact with an outlet aperture. In the schematic illustration of figure 1, the sheets are not aligned but only partially overlapping.
Figure 2 is a view from above of an enlarged section of the fluidization pad of figure 1. Figure 2 illustrates an example of the alignment and shape of the inlet apertures, the elongated apertures and the outlet apertures.
Figure 3 is an exploded isometric view of the enlarged section of figure 2.
Figure 4 schematically shows a fluidized bed apparatus for energy storage and/or CO₂ capture comprising a fluidization pad 1 as illustrated in figures 1 to 3.

### Detailed description

Before the invention is disclosed and described in detail, it is to be understood that this invention is not limited to particular configurations, process steps and materials disclosed herein as such configurations, process steps and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

"Energy storage" as used throughout the description and in the claims denote the storage of energy in chemical and/or thermal form.

"Energy storage material" as used throughout the description and in the claims denote any material in which it is possible to store energy in chemical and/or thermal form.

"Fluidized bed apparatus" as used throughout the description and in the claims denote an apparatus comprising at least one fluidized bed including necessary systems for the fluidized bed to be operated as known by a skilled person. The fluidized bed apparatus of the specification and appended claims may alternatively be referred to as a fluidized bed reactor.

"Solid particle" as used throughout the description and in the claims denote a piece of material in solid form.

"Volumes" as used throughout the description and in the claims denote spatial three-dimensional objects including but not limited to particles. Volumes include droplets of liquids as well as solid particles.

In a first aspect there is provided a fluidization pad 1 for a fluidized bed apparatus 50, the fluidization pad 1 comprising:
- a lower sheet 10 comprising inlet apertures 11 through which a fluidization fluid may enter the fluidization pad 1,
- an upper sheet 30 comprising outlet apertures 31 through which the fluidization fluid may exit the fluidization pad 1, and
- an interior sheet 20 arranged between the lower and upper sheets 10, 30,

wherein the lower, interior, and upper sheets 10, 20, 30 are in close contact with one another,
the interior sheet 20 comprises elongated apertures 21 connecting the inlet apertures 11 to the outlet apertures 31, and
the elongated apertures 21 extend in plane with the fluidization pad 1.

An embodiment of such a fluidization pad 1 is illustrated in figures 1 to 4. In this embodiment, the sheets 10, 20, 30 are flat. Further, in this embodiment, the sheets 10, 20, 30 are circular. In other embodiments the sheets may have other shapes than flat and circular.

The fluidization pad 1 may alternatively be referred to as a fluid nozzle or a perforated separator.

In figure 1, the sheets 10, 20, 30 are shown offset, i.e., only partly overlapping, for the purpose of illustration such that the apertures 11, 21, 31 are visible. When in use as a fluidization pad 1, the sheets 10, 20, 30 are typically oriented such that they fully overlap. Further, the apertures 11, 21, 31 are only indicated at portions of the sheets 10, 20, 30. Typically, the apertures 11, 21, 31 are present over the entire sheets 10, 20, 30. Typically, the apertures 11, 21, 31 are evenly distributed over the entire sheets 10, 20, 30.

As is known to a person skilled in the art, a permeable fluidization pad 1 is provided for fluidizing particulate material in a fluidized bed apparatus 50. The fluidization pad 1 has an upper and a lower surface. The particulate material to be fluidized rests on the upper surface and by flowing fluidizing fluid through the fluidization pad 1, from its lower surface to its upper surface, the particulate material is brought to fluidize.

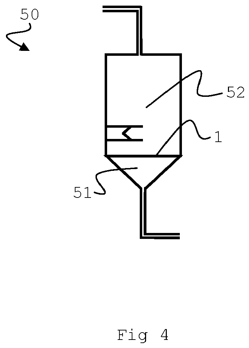

The chamber above, or downstream, the fluidization pad 1 within the fluidized bed apparatus 50 may be referred to as a reaction chamber 52, see figure 4. The chamber below, or upstream, the fluidization pad within the fluidized bed apparatus 50 may be referred to as a fluid supply chamber 51.

In accordance with the present disclosure, the upper surface of the fluidization pad 1 is formed by the upper sheet 30 and the lower surface is formed by the lower sheet 10. The sheets 10, 20, 30 may alternatively be referred to as plates.

The present fluidization pad 1 provides fluid paths through the inlet apertures 11 to the elongated apertures 21 and to the outlet apertures 31. By distributing the apertures 11, 21, 31 over the area of the fluidization pad, a uniform pressure drop across the entire fluidization pad area may be obtained, which may be beneficial for uniform fluidization of the particulate material within the fluidized bed apparatus. The flow area provided by the joint apertures 11, 21, 31 may be tailored to provide a high pressure drop. For example, all outlet apertures 31 may be of the same area and may be substantially smaller than the inlet apertures 11.

If the fluidization pad 1 is designed such that the outlet apertures 31 provide the smallest flow area through the fluidization pad 1, the flow rate (or velocity) may be highest at the outlet apertures 31 which may be beneficial for the fluidization of the particulate material. Further, such design may effectively blow out any particulate material that may have entered the fluidization pad 1 during downtime of the fluidized bed apparatus 50.

Referring to figures 1 to 3, the inlet apertures 11 may be of a circular shape, i.e., of a circular cross section as seen transverse the thickness of the lower sheet 10. More precisely, the inlet apertures 11 may be circular through-holes made in the lower sheet 10. Each inlet aperture 11 should be of the same or at least similar shape and area, such that an even fluid flow or pressure drop through the lower sheet 10 is obtained. Thus, each inlet aperture 11 may be a circular through-hole.

Similarly, the outlet apertures 31 may be of a circular shape, i.e., of a circular cross section as seen transverse the thickness of the upper sheet 30. More precisely, the outlet apertures 31 may be circular through-holes made in the upper sheet 30. Each outlet aperture 31 should be of the same or at least similar shape and area, such that an even fluid flow or pressure drop through the upper sheet 30 is obtained. Each outlet aperture 31 may be a circular through-hole.

When fluidizing fluid is brought to flow through a fluidization pad, for example in a fluidized bed apparatus, the control may for example be based on constant fluid flow or constant fluid pressure. In a system based on a constant fluid flow of the fluidizing fluid, adjustment of the flow area through the fluidization pad changes the pressure drop through the fluidization pad. In a system based on a constant (inlet) pressure of the fluidizing fluid, adjustment of the flow area through the fluidization pad changes the fluid flow through the fluidization pad. Therefore, an adjustment of the fluid flow area through the fluidization pad may affect the pressure drop or the fluid flow through the fluidization pad.

In figure 3 it is indicated by means of arrows how the fluidization fluid flows through the sheets 10, 20, 30 of the fluidization pad 1. A straight dotted arrow indicates the fluid flow through the inlet aperture 11, a curved (C-shaped) arrow indicates the fluid flow through the elongated aperture 21 and a straight arrow indicates the fluid flow though the outlet aperture 31. Together, the three arrows indicate the fluid path through the fluidization pad 1. It is to be apprehended that figure 3 is an exploded view, when in use the lower, interior, and upper sheets 10, 20, 30 are in close contact with one another. The upper sheet 30 may rest on the interior sheet 20 that may rest on the lower sheet 10. Comparing figures 1 and 3, it is further to be apprehended that there is a great number of such fluid paths uniformly distributed over the entire area of the fluidization pad 1.

Referring in particular to figure 3, the fluidization fluid enters and flows through an inlet aperture 11 in a direction that is substantially normal to the plane of the fluidization pad 1. The inlet aperture 11 is in fluid connection with an upstream end of an elongated aperture 21. Through the elongated aperture 21, the fluidization fluid flows in plane with the fluidization pad 1. As is illustrated, the elongated aperture 21 may be non-straight, in the present example essentially C-shaped. In other words, the fluidization fluid may flow in a C-shape along the elongated aperture 21. A downstream end of the elongated aperture 21 is in fluid connection with an outlet aperture 31. The flow exits the outlet aperture 31 in a direction that is substantially normal to the plane of the fluidization pad 1.

In more detail, the fluidization fluid flow through the elongated aperture 21 is limited by the sidewalls of the elongated aperture 21 and by the lower and upper sheets 10, 30, respectively. More precisely, a flow channel is defined by the sidewalls of the elongated aperture 21, the upper surface of the lower sheet 10 and the lower surface of the upper sheet 30. It follows that the parts of the lower and upper sheets 10, 30 that define the lower and upper walls of the flow channel are solid, i.e., unapertured. In the shown example, the cross section of the flow channel formed by the elongated apertures 21 and the lower and upper sheets is rectangular. See in particular figure 3.

The elongated apertures 21 are of an elongated shape. In other words, the elongated apertures 21 have a length that exceeds their height (measured orthogonal to the plane of the interior sheet 20). In more detail, the elongated apertures 21 have a length that exceeds their height and width. In the illustrated embodiment, the elongated apertures 21 comprise an upstream end, a first curved portion 22, a straight portion 23, a second curved portion 24 and a downstream end.

The elongated apertures 21 are through-holes made in the interior sheet 20. Each elongated aperture 21 should be of the same or at least similar shape and area, such that an even fluid flow or pressure drop through the interior sheet 20 is obtained. Thus, each elongated apertures 21 may be an elongated through-hole, such as a C-shaped through-hole as described above and illustrated in figures 1 to 3.

The fluidization pad 1, or fluid nozzle or perforated separator, described herein may find use in other applications than fluidized bed apparatuses. One conceivable application is pneumatic particulate material transport. A pneumatic transport device may be furnished with at least a bottom wall of a structure in accordance with the fluidization pad 1 described herein. Another conceivable application is filtration, wherein a filtration device, such as a sieve, comprises a structure in accordance with the fluidization pad 1 described herein.

In one embodiment, as is shown in figures 2 and 3, each single elongated aperture 21 connects one single inlet aperture 11 to one single outlet aperture 31. In other words, one single flow channel may be formed by one inlet aperture 11, one elongated aperture 21 and one outlet aperture 31.

The extension or orientation of the elongated apertures 21 in the plane of the fluidization pad 1 effectively hinders particulate material from passing through the fluidization pad 1. Typically, as is shown in figure 3, a fluidization pad 1 is arranged to separate a reaction chamber 52 from a fluid supply chamber 51, where the reaction chamber 52 is positioned higher than the fluid supply chamber 51. Thus, the fluidization pad 1 is typically arranged essentially horizontally such that the elongated apertures 21 extend essentially horizontally. The particulate material will not be moved by gravity through the elongated apertures 21. In the example of figure 3, the fluidization pad 1 is arranged essentially horizontally such that the elongated apertures 21 extend horizontally.

In one embodiment, the elongated apertures 21 have a length to height ratio that is selected in view of the angle of repose of the particulate material contained in the fluidized bed apparatus. For example, the length to height ratio may be in the range of 3 to 10. The length to height ratio may be in the range of 4 to 8. The height of the elongated apertures may be equal to the thickness of the interior sheet. The larger the length to height ratio of the elongated apertures 21, the lower the risk that particulate material passes through the fluidization pad 1, i.e., from the reaction chamber 52 to the fluid supply chamber 51.

The larger the length to height ratio of the elongated apertures 21, the more area the elongated apertures 21 occupy on the interior sheet 20. A very large length to height ratio of the elongated apertures 21 may pose challenges as regards how to arrange or fit the elongated apertures 21 on the interior sheet 20. Especially in embodiments having a large number of outlet apertures 31 where each elongated aperture 21 is to be connected to one outlet aperture 31.

In one embodiment, the elongated apertures 21 extend non-straight. By non-straight is meant that the elongated apertures 21 extend along a path that is not straight, i.e., is not a straight line. On other embodiment, the elongated apertures 21 may be straight, i.e., extend straight. Non-straight elongated apertures 21 may be beneficial for arranging a relatively large number of elongated apertures 21 in the interior sheet 20, with a length to height ratio in the range of 3 to 10.

Non-straight elongated apertures 21 may, as compared to straight elongated apertures 21, more efficiently hinder particulate material from passing through the elongated apertures 21. A curve or bend of a non-straight elongated aperture 21 as such may hinder particulate martial from movement through the elongated aperture 21. In addition, non-straight elongated apertures 21 may be beneficial for embodiments with large length to height ratios of the elongated apertures 21.

In one embodiment, at least a portion 22, 24 of the elongated apertures 21 extends curved. Thus, such elongated apertures 21 extend non-straight. The elongated apertures 21 may, as described above with reference to figures 2 and 3, comprise an upstream end, a first curved portion 22, a straight portion 23, a second curved portion 24 and a downstream end.

In one embodiment, the elongated apertures 21 are essentially C-shaped or semicircular. Such shapes may allow for an increased density of inlet and outlet apertures 11, 31. In other words, a greater number of inlet and outlet apertures 11, 31 may be arranged on the fluidization pad 1. Thus, zones without fluidization may be minimized such that a uniform fluidization over the entire area of the fluidization pad 1 may be provided for.

In addition, essentially C-shaped or semicircular elongated apertures 21 may allow for inclination (non-horizontal placement or orientation) of the fluidization pad 1, or of a section thereof, without particulate material passing through the fluidization pad 1.

In one embodiment, the elongated apertures 21 comprise a choke section 25 that is configured to reduce the flow area of the elongated apertures 21 and thereby increase the flow rate at the choke section 25. One example of such a choke section 25 is shown in figure 2. The choke section 25 may be a section of an elongated aperture 21 where the flow area of the elongated aperture 21 is reduced. Thus, the elongated aperture 21 may comprise a narrowed section that forms the choke section 25. As is illustrated, the choke section 25 may be realized by the elongated aperture 21 comprising a protrusion (in this embodiment semi-circular) that protrudes from the sidewall of the elongated aperture 21 into the elongated aperture 21. There may be an opposing protrusion (not shown) that protrudes from the opposite sidewall.

The choke section 25 may increase the fluid flow rate at the choke section 25 which may be located upstream the outlet aperture 31 and thereby effectively blow out any particulate material from the fluidization pad 1, which particulate material may have accumulated in the vicinity of the outlet aperture 31. Such accumulated particulate material may exist inside the elongated aperture 21 and/or on top the upper sheet 30. The choke section 25 may be located essentially adjacent the outlet aperture 31. The choke section 25 may be located such that the fluid flow rate is increased shortly upstream and through the outlet aperture 31. In addition, the choke section 25 may provide the above-described pressure drop.

Each elongated aperture 21 may comprise a choke section 25 that is configured to reduce the flow area of the elongated aperture 21.

In one embodiment, as is shown in figures 2 and 3, the choke section 25 is positioned at a downstream end of the elongated apertures 21. The choke section 25 may be positioned in the above-described second curved portion 24. The choke section 25 may be positioned close to the downstream end of the elongated apertures 21.

In one embodiment, the area of each outlet aperture 31 is approximately 4 mm². The area of the outlet apertures 31 may be tailored to provide a desired pressure drop. Typically, the area of each outlet aperture 31 is in the range of 0.8 to 8 mm².

In one embodiment, the thickness of the interior sheet 20 is less than the thickness of the lower sheet 10 and/or is less than the thickness of the upper sheet 30. A low thickness of the interior sheet 20 and thus a low height (measured orthogonal to the plane of the interior sheet 20) of the elongated apertures 21 may hinder particulate material from passing through the elongated apertures 21.

In one embodiment, the thickness of the lower sheet 10 is greater than thickness of the interior sheet 20 and of the upper sheet 30. The lower sheet 10 may thereby provide good mechanical support to the interior sheet 20 and the upper sheet 30.

In one embodiment, the lower, interior, and upper sheets 10, 20, 30 are circular and arranged concentrically. The fluid flow area through the fluidization pad 1 may be adjusted by rotating the sheets 10, 20, 30 with respect to one another.

In one embodiment, as is illustrated in figures 2 and 3, the inlet apertures 11 and the elongated apertures 21 fully overlap. By rotating the lower sheet 10 and/or the interior sheet 20, the inlet apertures 11 and the elongated apertures 21 may be brought to only partly overlap such that the flow area through the fluidization pad 1 is reduced.

In one embodiment, as is illustrated in figures 2 and 3, the outlet apertures 31 and the elongated apertures 21 fully overlap. By rotating the upper sheet 30 and/or the interior sheet 20, the outlet apertures 31 and the elongated apertures 21 may be brought to only partially overlap.

In one embodiment, the fluidization pad 1 is flat. In other words, the fluidization pad 1 extends parallel to a flat plane. When in use in a fluidized bed apparatus 50, the fluidization pad 1 may extend in a horizontal plane.

In one embodiment, the fluidization pad 1 is made of steel. In one embodiment, the fluidization pad 1 is made of high-temperature steel.

In a second aspect there is provided a fluidized bed apparatus 50 for energy storage and/or CO₂ capture comprising a fluidization pad 1 of the type described above. Particulate material for such purposes may comprise particles of small size, and/or particles that easily flow, almost like a liquid. The fluidized bed apparatus 50 with the present fluidization pad 1 may be particularly useful for fluidizing phase change material coated with nanoparticles. One reason being that phase change material coated with nanoparticles may have a low angle of repose, where the elongated apertures extending in plane with the fluidization pad still hinder the material from moving through the fluidization pad. Another reason being that phase change material may undergo volume changes during energy storage and/or CO₂ capture, which volume changes may increase the risk of prior art fluidization pads becoming clogged.

In one embodiment, the fluidized bed apparatus is a multistage fluidized bed (MSFB) apparatus.

In one embodiment, the fluidized bed apparatus 50 comprises an energy storage and/or CO₂ capture material that comprises solid particles having an average size in the interval 1-500 nm (nanometers) calculated according to ISO 9276-2:2014 from a particle size distribution measured according to ISO 17867:2020.

In one embodiment, the fluidized bed apparatus 50 comprises an energy storage and/or CO₂ capture material, wherein the energy storage and/or CO₂ capture material is provided in volumes coated with an outer layer of solid particles of a different material, wherein the volumes have an average size in the interval 1-1000 um (micrometers) as calculated according to ISO 9276-2:2014 from a particle size distribution measured according to ISO 19749:2021 and wherein the solid particles have an average size in the interval 1-500 nm calculated according to ISO 9276-2:2014 from a particle size distribution measured according to ISO 17867:2020.

Some solid particles may not be adhered to the volumes. Thus, there may exist free solid particles that are a few nanometers in size in the energy storage and/or CO₂ capture material. The fluidization pad 1 described herein may be particularly suitable for fluidizing such nanometer-sized solid particles and for hindering them from passing through the fluidization pad.

The particles size and the particle size distribution are measured according to ISO 19749:2021 and ISO 17867:2020 respectively. Thereafter the average size is calculated from the particle size distribution according to ISO 9276-2:2014. The average size is one value for each type of particles respectively. That particular average value should be within the stated interval.

In one embodiment, the energy storage and/or CO₂ capture material comprises at least one selected from CaO and CaCO₃.

When the fluid bed apparatus is used it is possible to measure the pressure drop or another flow characteristic across the fluidization pad 1. This step may alternatively be performed by calculation and then be referred to as a calculation step. The pressure drop depends on a variety of factors, such as the apertures 11, 21, 31.

## Claims

1. A fluidization pad (1) for a fluidized bed apparatus (50), the fluidization pad (1) comprising:
- a lower sheet (10) comprising inlet apertures (11) through which a fluidization fluid may enter the fluidization pad (1),
- an upper sheet (30) comprising outlet apertures (31) through which the fluidization fluid may exit the fluidization pad (1), and
- an interior sheet (20) arranged between the lower and upper sheets (10, 30),
wherein the lower, interior, and upper sheets (10, 20, 30) are in close contact with one another,
the interior sheet (20) comprises elongated apertures (21) connecting the inlet apertures (11) to the outlet apertures (31), wherein each one of the elongated apertures (21) comprises a first end and a second end, wherein the first end is in fluid contact with at least one inlet aperture (11), and wherein the second end is in fluid contact with at least one outlet aperture (31), and the elongated apertures (21) extend in plane with the fluidization pad (1).

2. The fluidization pad (1) according to claim 1, wherein each elongated aperture (21) connects one inlet aperture (11) to one outlet aperture (31).

3. The fluidization pad (1) according to claim 1 or 2,
wherein the length to height ratio of the elongated apertures (21) is in the range of 3 to 10.

4. The fluidization pad (1) according to any of the preceding claims, wherein the elongated apertures (21) extend non-straight.

5. The fluidization pad (1) according to any one of the preceding claims, wherein at least a portion (22, 24) of the elongated apertures (21) extends curved.

6. The fluidization pad (1) according to any one of the preceding claims, wherein the elongated apertures (21) are essentially C-shaped.

7. The fluidization pad (1) according to any one of the preceding claims, wherein the elongated apertures (21) comprise a choke section (25) that is configured to reduce the flow area of the elongated apertures (21) and thereby increase the flow rate at the choke section (25) .

8. The fluidization pad (1) according to any one of the preceding claims, wherein the thickness of the interior sheet (20) is less than the thickness of the lower sheet (10) and/or is less than the thickness of the upper sheet (30).

9. The fluidization pad (1) according to any one of the preceding claims, wherein the thickness of the lower sheet (10) is greater than thickness of the interior sheet (20) and of the upper sheet (30).

10. The fluidization pad (1) according to any one of the preceding claims, wherein the lower, interior, and upper sheets (10, 20, 30) are circular and arranged concentric and wherein the fluid flow area through the fluidization pad (1) may be adjusted by rotating the sheets (10, 20, 30) with respect to one another.

11. A fluidized bed apparatus (50) for energy storage and/or CO₂ capture comprising a fluidization pad (1) according to any one of claims 1-10.

12. The fluidized bed apparatus (50) according to claim 11 comprising an energy storage and/or CO₂ capture material that comprises solid particles having an average size in the interval 1-500 nm calculated according to ISO 9276-2:2014 from a particle size distribution measured according to ISO 17867:2020.

13. The fluidized bed apparatus (50) according to claim 11 or 12 comprising an energy storage and/or CO₂ capture material, wherein the energy storage and/or CO₂ capture material is provided in volumes coated with an outer layer of solid particles of a different material, wherein the volumes have an average size in the interval 1-1000 um as calculated according to ISO 9276-2:2014 from a particle size distribution measured according to ISO 19749:2021 and wherein the solid particles have an average size in the interval 1-500 nm calculated according to ISO 9276-2:2014 from a particle size distribution measured according to ISO 17867:2020.

14. The fluidized bed apparatus (50) according to any one of claims 11 to 13, wherein the energy storage and/or CO₂ capture material comprises at least one selected from CaO and CaCO₃.
